Europäisches Patentamt

(19) European Patent Office

Office européen des brevets

(11) Publication number: **0 012 745**
**B1**

(12) **EUROPEAN PATENT SPECIFICATION**

(45) Date of publication of patent specification: **19.09.84**

(51) Int. Cl.³: **C 02 F 3/22, C 02 F 3/30, C 02 F 1/72, C 02 F 11/06**

(21) Application number: **78900273.0**

(22) Date of filing: **31.10.78**

(86) International application number:
**PCT/US78/00131**

(87) International publication number:
**WO 79/00262 17.05.79 Gazette 79/10**

(54) **OXIDATION DITCH WITH FLOW-CONTROL APPARATUS AND USE THEREOF IN AN ACTIVATED SLUDGE PROCESS.**

(30) Priority: **04.11.77 US 848705**

(43) Date of publication of application:
**09.07.80 Bulletin 80/14**

(45) Publication of the grant of the patent:
**19.09.84 Bulletin 84/38**

(84) Designated Contracting States:
**CH DE FR GB LU SE**

(56) References cited:
AT-A- 339 224
GB-A- 796 438
US-A- 996 560
US-A-1 247 542
US-A-1 286 017
US-A-1 643 273
US-A-1 900 809
US-A-2 263 534
US-A-2 521 396
US-A-3 206 176
US-A-3 210 053
US-A-3 510 110
US-A-3 547 814
US-A-3 555 828
US-A-3 642 257
US-A-3 643 403

(73) Proprietor: **REID, John, Hager**
**7 Stansbury Court**
**Fredericksburg, VA 22401 (US)**

(72) Inventor: **REID, John, Hager**
**7 Stansbury Court**
**Fredericksburg, VA 22401 (US)**

(74) Representative: **Jukes, Herbert Lewis et al**
**Swann, Elt & Company 31 Beaumont Street**
**Oxford OX1 2NP (GB)**

(56) References cited:
US-A-3 652 061
US-A-3 671 022
US-A-3 744 255
US-A-3 764 523
US-A-3 819 512
US-A-3 827 676
US-A-3 846 292
US-A-3 865 721
US-A-3 865 908
US-A-3 994 802

**American Society of Mechanical Engineers,**
**75WA/PWR-3, Issued 04 December 1975, New**
**York, DR. S00, Power Spray Cooling**

Courier Press, Leamington Spa, England.

**Description**

This invention relates to aeration pumping of wastewater such as sewage within closed circuit oxidation ditches.

Many liquid treatment processes, commonly termed aerobic processes, supply bacteria and other bio-organisms with dissolved oxygen for treating aqueous wastes such as municipal sewage, cannery wastes, dairy wastes, meat-processing wastes, and the like.

Such aerobic processes are commonly accelerated by concentrating and activating the bio-organisms, termed bio-mass or activated sludge, and returning this sludge to be mixed with incoming wastewater which supplies food for the organisms. Activated-sludge processes for aerobic treatment of wastewaters have followed two main lines of development: vertical-flow aeration basins and circuit-flow oxidation ditches.

Vertical-flow aeration basins are typically aerated on a large scale with one or more impeller-type aerators which are vertically mounted and disposed at the surface of the liquid, as discussed in Water & Wastes Engineering, September, 1975, pages 76—79, using an aerator such as is described in U.S. Patent No. 3,479,017 and producing a uniform dissolved-oxygen (D.O.) content of 2.0 mg/liter. Such impeller aerators are frequently mounted within and at the upper open end of a draft tube extending partially or entirely to the bottom of the basin so that the aerator can more efficiently pump liquid from the bottom of the basin, having a depth up to 12.19 metres, and disperse it over the surface of the basin, thereby improving vertical circulation over a wide area. When fitted with a gear reducer to spin a 2.74 meters diameter impeller at low speeds, oxygen transfer efficiencies of 1.59 kg $O_2$/0.75 kw/hour have been approached.

In an early oxidation-ditch process, Dutch Patent 87,500 discloses horizontally mounted rotors having brush surfaces for adding oxygen to sewage and causing the sewage to flow for a period of time in a closed-loop circuit within an ovally laid-out ditch, the liquid then being clarified by settling and excess sludge being removed. In subsequent developments directed to adding oxygen to sewage and inducing circuit-flow circulation in oxidation ditches, U.S. Patent No. 3,336,016 discloses an S-shaped duct, U.S. Patent No. 3,510,110 the combination of a longitudinal partition and a vertically disposed surface aerator which is adjacent thereto, and U.S. Patent No. 3,846,292 a plurality of subsurface ejector aerators.

U.S. Patent No. 3,900,394 discloses a sewage purification process, to be carried out in a circuit-flow oxidation ditch having an impeller-type aerator at one or both ends, which comprises sequential aeration of incoming sewage, aerobic decompostion and depletion of its oxygen content, introduction of additional sewage to the oxygen-starved bacteria, and, simultaneously, aerobic decomposition and denitrification of the additional sewage as the bacteria break down its nitrates.

A circuit-flow oxidation ditch is a complete mix system operating in plug-type flow. It can be designed to operate with recycled sludge on a food-to-microorganism ratio (F/M) varying over a possible range of 0.01 to 5.0, depending upon space, cost, and process design requirements. If operating at a low F/M ratio of 0.01—0.2, it is an extended aeration system, producing small quantities of sludge. If operating at a medium F/M ratio of 0.2—0.5, it is a conventional system. If operating at a high F/M ratio of 0.5—2.5, it is a high-rate activated sludge system, producing large quantities of sludge. Moreover, it can even be operated as an activated lagoon with no recycled sludge, having F/M ratios above 2.5. An oxidation ditch may also shift through a wide F/M range, representing all three of these systems, as it begins operation as a high-rate activated sludge system, with no built-up sludge, and gradually builds up its recycled sludge to a mixed liquor suspended solids (MLSS) content of 3,000 mg/l where extended aeration can generally be considered to begin.

There are now three main types of aeration apparatuses in use within circuit flow oxidation ditches of varied depth and variety of layouts, such as an oval-shaped racetrack and a plurality of looped or endless channels. These are:

1) horizontally shafted surface aerators,
2) vertically shafted surface aerators, and
3) eddy-jet type subsurface aerators.

Horizontally shafted surface aerators are of two general types:

1) brush, cage, or rotor aerators, such as those manufactured by Lakeside Equipment Corporation, Bartlett, Illinois, an Passavant Corporation, Birmingham, Alabama, which have a maximum power input of about 37.29—44.74 kw, and
2) aeration discs, such as those manufactured by Envirex, Incorporated, Waukesha, Wisconsin.

Each type transfers 0.91—1.47 kg of oxygen per shaft 0.75 kw per hour from air to the mixed liquor.

Slow-speed surface aerators are used in looped channel designs known as Carrousel, developed by Dwars, Heederik Verhay, of Amersfoort, the Netherlands, as an improved form of the basic oxidation ditch. Each aerator is mounted vertically in the rounded end of a deep channel having a central partition that is positioned close to the aerator to create within the channel a uniform turbulent flow that is both longitudinal and spiral in nature. Such a surface aerator transfers 1.36—1.81 kg of $O_2$/0.75 kw/hr from air to mixed liquor.

An eddy-jet system is known as deep channel jet aeration, sold by Penberthy Division of Houdaille Industries, in which air jet headers are mounted near the floor of a 6.1 metres deep channel to provide propulsion and high-efficiency aeration at an oxygen transfer efficiency of 1.36—1.81 kg $O_2$/0.75 kw/hr.

Greater transfer efficiencies are needed in order to conserve energy and minimize the cost and number of aeration devices which are needed in an oxidation ditch.

When oxygenating water with air, the necessary driving force increases non-linearly as the dissolved-oxygen content of the water increases. Frequency of liquid-gas contact is consequently quite important from an efficiency viewpoint even though mixing of liquid parcels having various contents of dissolved oxygen soon produces a uniform average oxygen content. More specifically, if a portion of the liquid, initially having zero dissolved oxygen, contacts a gas such as air several times, it at first absorbs oxygen very readily but increasingly slowly thereafter. Vertical circulation causes some aerated water to be directly back-mixed into the intake of the aerator. Thus, energy is wasted by attempting to re-aerate water that has already been aerated. A need consequently exists for a flow control method and means for minimizing vertical circulation and turbulent mixing and for bringing liquid and gas into singly occurring contact.

These prior-art systems using surface aerators are generally plagued with aerosol spray and misting freezing problems in cold weather, dependence of mixing and power consumption upon oxygen demand, excessive noise, dependence of power consumption upon liquid-level variations, and the need for floating aerators to compensate for variations in the liquid level. The eddy-jet system requires excessively high blower pressure to introduce air at the bottom of a deep channel and requires the operation and maintenance of a plurality of circulation pumps to force or inject mixed liquor through the submerged jets.

Another prior system is disclosed in Austrian Patent No. 339224 of TATABANYAI SZENBANYAK in TATABANYA (HUNGARY) entitled "Process and installation for the circulation and aeration of liquids, particularly in plants for the biological treatment of waste water and sewage, preferably in oxidation ditches". In some forms the system includes a barrier dividing the ditch into upstream and downstream channels, and an axial flow pump arrangement intermediate the channels.

A first aspect of the present invention provides a closed-circuit oxidation ditch comprising a waste-water inlet, an outlet to a clarifier, a return sludge inlet, and an endless channel having a bottom, opposed sides, and a substantially uniform cross-sectional area, wherein said ditch contains flow-control apparatus adapted to provide repetitive aerobic treatment at least once per circuit-flow cycle to all mixed liquor within said endless channel, which flow-control apparatus comprises:

A. a barrier which is sealably attached to said bottom and said sides and is disposed athwart said endless channel to divide said mixed liquor and said endless channel into upstream liquor within an intake channel and downstream liquor within a discharge channel;

B. an axial-flow pump, comprising a down-flow impeller, an intake funnel which is disposed above said impeller and in flow connection with said upstream liquor, an air sparge means for producing air bubbles which is disposed beneath said impeller, and a downdraft tube surrounding said impeller and said air sparge means;

C. a mounting means for mounting said axial-flow pump in said flow connection with said upstream liquor;

D. an aeration means for creating a liquid-air mixture, comprising said air sparge means, a source of compressed air, and a delivery means for moving said comprssed air from said source to said air sparge means; and

E. a discharge duct which connects said downdraft tube to said discharge channel, whereby operation of said axial-flow pump and said aeration means:

1) forces all of said mixed liquor to flow through said discharge duct,
2) creates a liquid-air mixture within said discharge duct,
3) completely prevents back-mixing of said aerated mixed liquor to said intake channel.

Said ditch of the present invention can be embodied in any suitable manner. For example, said ditch can be characterised by that said barrier means is an earthen barrier having a trapezoidal cross section and covered with a layer of gunnite. Said ditch can be characterised by that said flow-control apparatus comprises at least two said axial-flow pumps, at least two said mounting means, at least two said aeration means, and at least two said discharge ducts in side-by-side relationship. Said ditch can be characterised by that said discharge ducts converge toward said discharge channel. Said ditch can be characterised by that said discharge duct passes beneath said barrier at a greater depth than said bottom of said endless channel, whereby a pressure is generated upon said liquid-air mixture that is greater than the hydraulic pressure at said bottom. Said ditch can be characterised by that said discharge duct is flow-connected to said downdraft tube, leads downwardly to a selected depth, curves in a downstream direction for a selected distance, and leads upwardly to a discharge point within said discharge channel. Said ditch can be characterised by that said discharge duct comprises a curved discharge section which is conntected to said downdraft tube, a first straight section which is connected to said curved discharge section, an updraft section which is connected to said first straight section, a second straight section which is connected to said updraft section, and a terminal duct which is connected to said second straight section and is disposed in said discharge channel. Said ditch can be characterised by that said aeration means comprises a sparge tube which is disposed within said discharge duct to provide supplementary air when BOD loads are very heavy and when it is desirable to substitute discharge duct aeration for pump aeration because of flow rate considerations, so that the velocity of upwardly translational movement through said discharge duct is increased by an air-lift pumping effect acting in addition to the pumping effect of said down-flow impeller. Said ditch can be characterised by that said sparge tube is transversely disposed within said discharge duct.

A second aspect of the present invention provides an activated sludge process for aerobically treating a continuous stream of wastewater by continuously admixing said stream with a quantity of circulating mixed liquor which flows translationally within the endless channel of an oxidation ditch at a circulation velocity that is sufficient to maintain flow in a state of suspension therewithin, wherein said process comprises the following steps:

    A. providing a barrier means, disposed within said channel, for dividing said mixed liquor and said channel into upstream liquor within an intake channel and downstream liquor within a discharge channel;

    B. providing a discharge duct which connects said upstream liquor to said downstream liquor;

    C. providing a pump means for pumping all of said upstream liquor through said discharge duct from said intake channel to said discharge channel;

    D. providing an aeration means for introducing compressed air to said all of said intake liquor passing through said discharge duct; and

    E operating said pump means and said aeration means in order to:

1) cyclically force all of said mixed liquor through said discharge duct,
2) form a liquid-air mixture within said discharge duct,
3) completely prevent backmixing of said aerated mixed liquor to said intake channel; and wherein said pump means is an axial-flow pump, comprising a down-flown impeller, an intake funnel which is disposed above said impeller and in flow connection with said upstream liquor, an air sparge means for producing air bubbles and forming said liquid-air mixture, and a downdraft tube surrounding said impeller and said air sparge means, said intake funnel and said downdraft tube being connected as said intake end of said discharge duct.

Said process of the present invention can be embodied in any suitable manner. For example, said process can be characterised by that said discharge duct is extended at greater depth for a sufficient distance that substantially all of said repetitive aerobic treatment occurs within said discharge duct and under a selected hydraulic pressure that is greater than the pressure corresponding to said depth of said discharge channel. Said process can be characterised by that said air sparge means comprises at least one sparge ring which is disposed below said down-flow impeller within said downraft tube. Said process can be characterised by a plurality of said pump means, said aeration means, and said discharge ducts are provided and wherein said aeration means further comprises at least one sparge tube which is removably disposed within each said discharge duct. Said process can be characterised by varying the proportion of said compressed air fed to each said sparge ring and each said sparge tube, said velocity is varied by at least 50 per cent. Said process can be characterised by that said oxidation ditch is selectively operable:

    A. to provide aerobic and anoxic zones within said channel for combined nitrification and denitrification of said wastewater; and

    B. to vary the lengths of said aerobic and anoxic zones in accordance with seasonal temperature changes. Said process can be characterized by that said oxidation ditch is selectively operable by varying:

    (a) the operation of said impellers singly or in parallel,
    (b) the speeds of said impellers,
    (c) the total amount of said compressed air, and
    (d) the proportion of said compressed air between said sparge rings and said sparge tubes, whereby:

    (1) said velocity is variable over a range of from 15.24 cm/sec to at least 91.44 cm/sec while maintaining a selected dissolved-oxygen output from said discharge ducts, or
    (2) said dissolved-oxygen output is variable while maintaining a selected velocity, or
    (3) both said velocity and said dissolved-oxygen output are variable in any desired combination while operating all said turbines at a constant speed.

Said process can be characterised by that said continuous stream of wastewater is delivered to said

4

channel within said anoxic zone and upstream of said intake channel in order to enable certain of microorganisms, that are present in said anoxic zone and use nitrate oxygen as their oxygen sources and hydrogen sulfide as their energy source, to maximize denitrification and to minimize consumption of free dissolved oxygen for chemical and biological oxidation of said hydrogen sulfide, thereby enabling said free dissolved oxygen to be used to a maximum extent for biological BOD removal and nitrification, by utilizing nitrate oxygen that is available in said circulating mixed liquor for oxidation of said hydrogen sulfide that is present in said continuous stream of wastewater. Said process can be characterised by that said anoxic zone is at an anoxic level of about 0.5 mg./l. or less of dissolved oxygen.

The discharge duct may contain throughout any selected portion of its length a bubble-splitting and mixing means, such as the structures described in U.S. Patents 3,782,694; 3,635,444; 3,643,927; 3,664,638; 3,751,009; 3,733,057; 3,643,927; and 3,794,300, or an interfacial surface generator, such as the structures described in U.S. Patents 3,358,749; 3,394,924; and 3,406,947. The discharge duct may also be extended in the direction of flow for a sufficient distance that substantially all of the aerobic activity of the ditch occurs within the discharge duct and under a selected hydraulic pressure that is greater than the pressure corresponding to the depth of the channel.

The term, oxidation ditch, is currently used for relatively shallow oval-shaped basins in which mixed liquor is continuously circulated by horizontally mounted surface aerators, such as cage rotors and disc rotors; and other terms, such as looped channel and endless channel, are currently used for deep basins in which the mixed liquor moves back and forth through a plurality of side-by-side channel portions which have adjoining walls and semi-cylindrical ends providing connections between adjacent channel portions. However, the term, oxidation ditch, is employed herein as a general term encompassing both shallow and deep basins, whether circular, oval, or looped in any endless configuration.

A discharge duct is connected to the downdraft tube, leads downwardly to any desired depth, curves in a downstream direction, and leads upwardly to a discharge point within the discharge channel. Preferably, the discharge duct reaches a greater depth than that of either the intake channel or the discharge channel.

The flow-control apparatus in the invention provides separate control of mixed-liquor flow velocity and of mixied-liquor aeration. This operating characteristic is partly possible because the pumping capacity of the turbine is decreased only to a slight extent by varying the amount of air that is introduced to the sparge ring and is increased to a significant extent by introduction of compressed air to any of the sections of the discharge duct. By selectively shifting the proportions of air introduced to the sparge ring and to the discharge duct, the flow rate can be varied by at least 50 percent, and by varying: a) operation of the turbines singly or in parallel, b) the speeds of the turbines, c) the total amount of air, and d) the proportion of air between the sparge ring and the discharge duct, it is readily possible to vary the flow rate over a range of from 0.15 metres/sec to at least 0.91 metres/sec while maintaining a desired dissolved-oxygen (D.O.) output or to vary the D.O. output while maintaining a desired flow rate or to vary both properties in any desired combination, while operating all turbines at a constant speed.

One consequence of this capability is that the lengths of the aerobic and anoxic zones within the oxidation ditch can be varied as desired, particularly in accordance with seasonal temperature changes. If the flow rate is maintained constant and the D.O. level is decreased, for example, the aerobic zone is shorter and the anoxic zone is longer so that the mixed liquor is subject to aerobic and anoxic conditions for correspondingly timed aerobic/anoxic ratios. If the flow rate is increased, for example, while the D.O. level remains constant, the aerobic zone is maintained for the same time interval but throughout a greater distance so that a smaller remaining distance is in the anoxic state. Thus, the timed aerobic/anoxic ratio is increased.

The present invention will now be described by way of example with reference to the accompanying drawings, in which:

Figure 1 is a plan view of an oval-shaped oxidation ditch having an island and a double-turbine flow-control apparatus of this invention, disposed athwart one straight channel.

Figure 2 is a sectional elevation, taken approximately in mid-channel and looking in the direction of the arrows 2—2 in Figure 1.

Figure 3 is a cross-sectional elevation of the oxidation ditch shown in Figure 1, looking in the direction of the arrows 3—3 in Figure 1, toward the turbines and the barrier.

Figure 4 is a plan view of a portion of an oxidation ditch, similar to the ditch of Figure 1, having a triple-turbine flow-control apparatus which is disposed athwart a straight channel.

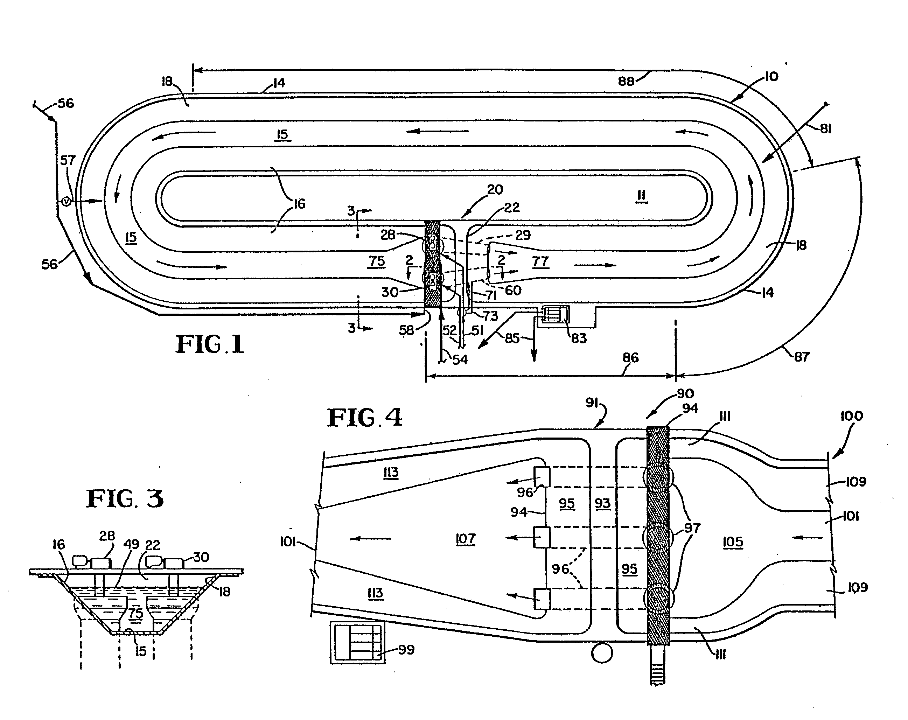

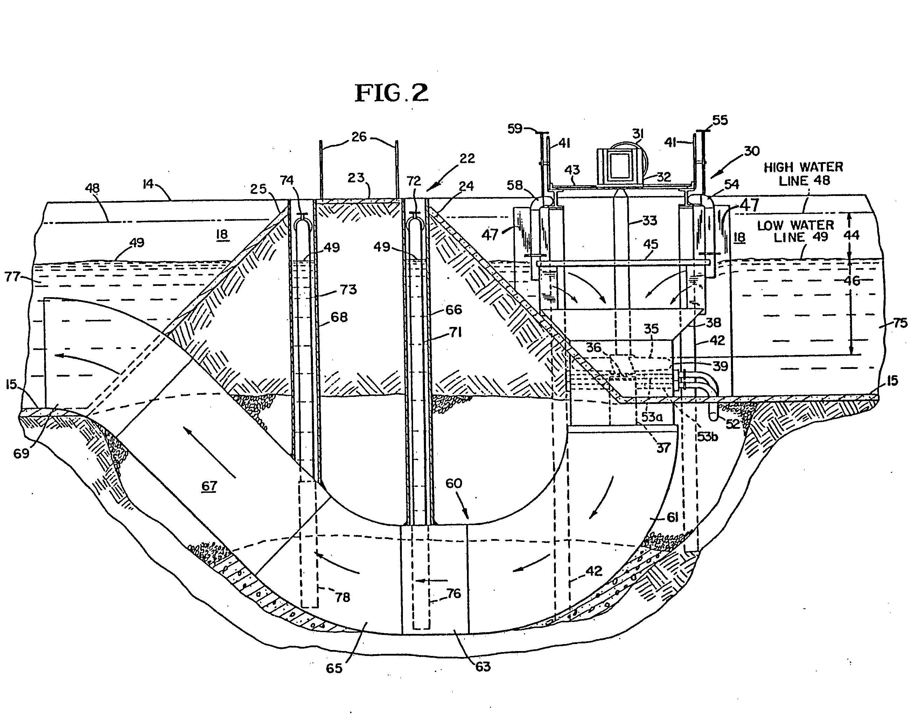

The flow-control apparatus 20 of this invention, as shown in Figures 1—3, is installed athwart a channel of an oxidation ditch 10 having an island 11, inner edge 12, and outer edge 14. Such a channel typically has a floor or bottom 15, sloping inner side 16, and sloping outer side 18.

The flow-control apparatus 20 comprises a barrier 22, a pair of turbines 28 and 30, which are preferably low-speed, vertically mounted, electrically driven turbines, and respective discharge ducts 29 and 60. The barrier 22 comprises a top 23, an upstream side 24, a downstream side 25, and a pair of handrails 26. Barrier 22 is suitably an earthern berm which is covered on its exposed surfaces with a layer of gunnite.

5

**O 012 745**

Turbine 30, as clearly seen in Figure 2, comprises a motor 31, a speed reducer 32 which is connected thereto, a vertically disposed shaft 33, propeller blades 35 at the bottom end of shaft 33, a coaxially disposed slap ring 36, a stabilizer cylinder 37 into which the slap ring 36 loosely fits, an intake funnel 38 which is diposed above the blades 35, and a downdraft tube 39 which surrounds the blades 35, slap ring 36, and stabilizer cylinder 37.

The turbines 28 and 30 are connected by a walkway 43 and a pair of handrails 41. Turbine 30 is mounted on columns 42 and is equipped with vertically disposed diffusers 47 and a horizontally disposed baffle stabilizer ring 45. An air sparge ring 53, with air openings facing the turbine blades 35, is mounted beneath the turbine blades and is connected to an air delivery line 52. Air delivery line 51 is connected to turbine 28.

As shown in Figure 1, a raw feed (wastewater) line 56 is connected to an anoxic delivery line 57 and to turbine delivery line 58 which supplies both turbines 28, 30. As seen in Figure 2, wastewater line 58 is controlled by a valve 59.

Return sludge line 54 likewise supplies both turbines 28, 30. As seen in Figure 2, delivery line 54 to turbine 30 is controlled by valve 55. As is known in the art, a portion of the mixed liquor flows continuously into clarifier 83 from which streams 85 of clarified liquor and of settled sludge are discharged. All of the clarified liquor and a portion of the sludge are sent to disposal facilities, and the remainder of the sludge flows through return sludge line 54 to turbines 28, 30.

Barrier 22 is also sealably attached to sides 16 and 18 and floor 15 of the channel in which it is disposed and which it divides into intake channel 75 and discharge channel 77. As seen in Figure 2, the mixed liquor in this channel may vary over range 44 in height, from high liquor level 48 to low liquor level 49, so there is always at least a minimum submergence depth 46 for intake funnel 38, a depth that is necessary to prevent cavitation.

Discharge duct 60 for turbine 30 is connected to downdraft tube 39, curves downwardly and forwardly beneath barrier 22 and curves upwardly again to empty into discharge channel 77 where it converges slightly with discharge duct 29. Discharge duct 60 comprises curved discharge section 61 which is connected to downdraft tube 39, first straight section 63 which is connected to section 61 and is horizontally disposed, curved updraft section 65 which is connected to straight section 63, second straight section 67 which is connected to section 65, and terminal duct 69 which is connected to section 67 and is curved downwardly so that discharge of aerated mixed liquor and air is essentially parallel to the floor 15 of the discharge channel 77 which is consequently in a constantly turbulent state.

Discharge duct 60, which is usually exactly like discharge duct 29, may readily be lengthened to any desired extent by inserting a plurality of straight sections 63 and/or by decreasing the angle of curvature of sections 65, 69 and inserting a plurality of straight sections 67. Moreover, the efficiency of oxygen-to-liquor transfer may be enhanced, particularly as the bacteria absorb the dissolved oxygen, by installing a plurality of bubble-splitting devices in the straight sections 63, 67 so that fresh interfacial surfaces are being continuously and rapidly generated, the air is prevented from coalescing into large bubbles and is instead split into small bubbles, and the liquid films surrounding individual bacterial and bacterial flocs are thinned, whereby oxygen transfer from the liquor into the bacterial is enhanced. Additional compressed air may be delivered to the discharge ducts 29 and 60 as illustrated for duct 60 in Figure 2 wherein auxiliary air delivery line 71, controlled by valve 72, delivers air to sparge tube 76 in first straight section 63 and auxiliary air delivery line 73, controlled by valve 74, delivers air to sparge tube 78 in second straight section 67. By selectively adjusting the valves (not shown in the drawings) for lines 51 and 52 and the valves 72 and 74, the flow rate through the discharge ducts 29 and 60 and the aeration of the mixed liquor may be selectively controlled, thereby changing the length of aerobic zone 79 and consequently the timed aerobic/anoxic ratio. This procedure is useful in response to changes in temperature, pH, BOD, and nitrogen load.

The flow-control apparatus used in invention may be of any desired size and may have any number of turbines in side-by-side relationship, as illustrated in Figure 4 for a triple-turbine installation. In a straight channel, having sizes 109 and floor 101, of oxidation ditch 100, the sides 109 become farther apart and steeper to define the much broader floor of an intake channel 105 which is separated from a discharge channel 107 by flow-control apparatus 90, comprising barrier 91, turbines 97, and discharge ducts 96. Barrier 91 comprises top 93, sides 95, and downstream bottom edge 94. Discharge channel 107 has sides 113 which gradually converge and become less steeply sloped to define a channel floor 101 of normal channel width. A clarifier 99, similar to clarifier 83 in Figure 1, receives a continuous flow of mixed liquor and discharges streams (not shown in the drawings) of settled sludge and clarified liquor.

A submerged turbine which is preferred for use in flow-control apparatus used in the present invention is an axial-flow Serial DAT aerator which is manufactured by Mixing Equipment Company, Inc., Rochester, New York, equipped with a down-flow, high-efficiency impeller and a sparge ring which is mounted immediately below the impeller, both being surround by a vertically disposed and relatively short draft tube. Such a submerged turbine is preferably mounted within the intake channel at a selected distance below its surface at low water level but may satisfactorily be mounted within the

6

barrier itself, in the island, or in the outer side area, provided that the intake of the turbine is always in flow communication with the intake channel and exposed to sufficient intake head.

A down-flow submerged turbine, at the inlet end of the discharge duct, may be combined with either an up-flow submerged turbine or a surface aerator at the outlet end thereof, and a sparge means can additionally be mounted within the discharge duct, so that if air is introduced within either or both turbines, there will be as many as three or even four points of aeration. The advantage of such combinations is that the speed of reaction of the micro-organisms under pressure is utilized, whereby the aerobic portion of the ditch may be greatly shortened.

The aeration means for introducing air to the mixed liquor being pumped from the intake channel to the discharge channel comprises a source of compressed air, a sparge means for producing air bubbles, and a delivery means for moving the compressed air from the source thereof, such as a blower of air compressor, to the sparge means.

The sparge means shown beneath the impeller or turbine blades in Figure 2 consists of a primary sparge ring 53a and a secondary sparge ring 53b, both being fed by delivery lines 52 with separate valves (not shown in the drawings) for each sparge ring 53a, 53b. Each ring has five radially aligned sparging fingers which are angularly displaced (i.e., offset) so that primary and secndary fingers are not in vertical alignment. Under low to moderate BOD loads, the sparge means 53a, 53b is operated by using the upper or primary ring 53a only. Under heavy BOD loads, both rings 53a, 53b are preferably utilized.

When supplementary air or industrial oxygen is desired, as when BOD loads are very heavy, or when it is desirable to substitute discharge duct aeration for turbine aeration because of flow rate considerations, sparge tubes 76, 78 in first straight section 63 and in curved updraft section 65, respectively, are utilized by adjusting valves 72, 74 which selectively admit compressed air (not shown in the drawings) into auxiliary air delivery lines 71, 73 and thence into sparge tubes 76, 78. The compressed air, liberated as bubbles, is swept along through the discharge ducts 29, 60 to form a mixture of relatively low density so that the velocity of upwardly translational movement through sections 63, 65, 67 and duct 69 is markedly increased by an air-lift pumping effect acting in addition to the pumping effect of the submarged turbine propeller.

The sparge tubes 76, 78 and their respective air delivery lines 71, 73 are removably mounted within respective casing pipes 66, 68 which are sealably attached to discharge duct 60, as shown in Figure 2, as by welding. Air delivery lines 71, 73 are preferably straight pipes, and sparge tubes 76, 78 may be transversely disposed within discharge duct 60. Mixed liquor rises approximately to level 49, as in the channels 75, 77 of the oxidation ditch 10, within the annular spaces between the casings 66, 68 and the air delivery lines 71, 73. If one of the sparge tubes 76, 78 ever becomes clogged or requires maintenance, a union at the top of its delivery line can be opened so that the assembly can be lifted out of its casing for cleaning the sparge tube.

As a means of conserving power consumption by the air compressors, each discharge duct 29, 60 may be W-shaped by connecting an additional recurved duct to duct 69, followed by a third straight section, another curved section, a fourth straight section at the lowest depth, still another curved section, a fifth straight section, and a final recurved section as the terminus in the discharge channel 77, just above floor 15. Preferably, barrier 22 is widened sufficiently so that top 23 extends above present duct 69 at the center or hump of the "W", and air delivery lines, like lines 71, 73 but much shorter, terminate in sparge tubes like sparge 76, 78 within duct 69, being removably mounted within casings similar to casings 76, 78.

Power is conserved because less pressure is needed to force compressed air to the center hump of the "W". The additional distance under pressure also enables the bacterial propulation to utilize dissolved oxygen for a longer time while enabling a secondary supply of oxygen to be transferred from the compressed air to the mixed liquor.

In Figure 1, aerobic zone 86 extends from the turbines 28, 30 to a short distance, such as 15.24—30.48 metres, downstream therefrom. This relatively short-length aerobic zone represents overall oxygen-starved process conditions, probably with relatively high F/M values in the range of 0.5—0.7.

Extension 87, around the bend, represents an additional length of aerobic activity in the channel of the oxidation ditch 10. The combined distance of zone 86 + zone 87 indicates a reasonable amount of dissolved oxygen in combination with lower F/M values in the range of 0.2—0.5. The remainder of the channel is at an anoxic level of about 0.1 mg/l or less of dissolved oxygen. This combined distance, divided by the remainder of the distance along the channel, produces a timed aerobic/anoxic ratio that is heavily biased toward denitrifying.

Extension 88, downstream in the opposite side of the ditch 10, represents still additional aerobic activity. The combined distance of zone 86 + zone 87 + zone 88 indicates optimum quantities of dissolved oxygen are being introduced into the flow path for the mixed liquor. This combined distance, divided by the remainder of the distance along the channel to the turbines 28, 30, gives a timed aerobic/anoxic ratio that is generally ideal for combined nitrification and denitrification.

Moreover, when the incoming wastewater feed is added via line 57, just above the floor 15 of the channel in the return bend, organic food sources are maximized for any heterotrophic facultative denitrifying bacteria that are present in the circulating mixed liquor. In addition, any nitrate oxygen that is available in the circulating mixed liquor for carbonaceous BOD reduction is utilized as fully as possible. More importantly, any nitrate oxygen that is available in the circulating mixed liquor is utilizable for oxidation of any hydrogen sulfide that is present in the feed waste such as an anaerobic lagoon effluent. Such utilization is performed by certain denitrifying bacteria that are present in the anoxic environment of the return bend. These bacteria utilize nitrate oxygen as their oxygen source and hydrogen sulfide as their food or energy source.

By such utilization, hydrogen sulfide in the wastewater feed from the anaerobic lagoon is used to maximize denitrifcation and to minimize consumption of free dissolved oxygen for chemical and biological oxidation of hydrogen sulfide, thereby enabling free dissolved oxygen to be used to a maximum extent for biological BOD removal and nitrification.

Locating the inlet pipe or an inlet flow diffuser or distribution pipe just above or along the floor 15 of the return bend, where turbulence naturally occurs, enhances opportunities for hydrogen sulfide to mix with the mixed liquor and minimizes its likelihood of escaping to the atmosphere.

By inspection of Figure 2, the high water level 48 differs from the low water level 49 by height 44, and the lower water level 48 is above the impeller 35 by submergence depth 46 which is the minimum under which the turbines 28, 30 can operate without cavitation.

In the oxidation ditch of this invention, the barrier 22, 91 does not function as a dam as might be supposed, but instead is used to control and direct the pumping action and pumping capability of the submerged turbines 28, 30, 97 so that they create the desired velocity of flow within the channel of the oxidation ditch by enabling pumped mixed liquor to be accumulated in one portion (i.e., the discharge channel 77, 107) of the channel of the ditch and thereby to build up as much head as necessary for pumping the mixed liquor as far and as rapidly as desired.

The barrier 22, 91 also completely prevents backmixing of aerated mixed liquor, thereby:

(1) increasing the log mean driving force across the intakes and discharges of the submerged turbines 28, 30, 96 and discharge ducts 29, 60, 97, thereby decreasing the energy required for dissolving a given quantity of oxygen in the mixed liquor and increasing the oxygen transfer efficiency and
(2) preventing short-circuiting of the mixed liquor with resultant stagnant areas in other parts of the channel.

From an energy standpoint, substantially no input power is used for pumping against a static lift. Instead, substantially all input power is used for overcoming dynamic losses caused by: 1) hydraulic friction created by circuit flow past the walls 16, 18 and floor 15 of the channel of the ditch 10; 2) hydraulic turbulence in the channel bends; and 3) hydraulic friction created by the sparge rings 53a, 53b, curved sections 61, 65, 69 and straight sections 53, 67 of the discharge ducts 29, 60.

The mixed liquor is also believed to be pushed or propelled only part of the distance around the channel of the oxidation ditch and is then pulled the remaining distance to the intakes of the submerged turbines 28, 30, 97.

The downdraft submerged turbine aerator offers the following process control advantages for use in the oxidation ditch process for treatment of wastewater: independent control of oxygen supply and mixing; easier control of power consumption to match oxygen demand; no aerosol spray and minimizing of misting; no freezing problems during cold weather operation as typically occurs with rotor aerators, brush aerators, disk aerators, and other surface aerators presently used in oxidation ditches; minimal noise; minimal effect of liquid level variations upon power consumption; and easy compensation for variation of liquid level in the oxidation ditch without the need for floating aerators.

The invention may be more thoroughly understood by study of the following examples, with reference to the drawings.

Example I

An oxidation ditch as shown in Figures 1—3 was designed and constructed to treat wastewater effluent from an anaerobic lagoon used for pretreatment and flow equalization of raw wastewater produced by a poultry processing plant. This anaerobic effluent was anticipated to have the following characteristics:

Biochemical oxygen demand, BOD(5)=800 mg/l
Total suspended solids, TSS=304
Ammonia nitrogen=40 mg/l
Total Kjeldahl nitrogen, TKN=62 mg/l
pH=6.4
Total phosphorus=6—20 mg/l

The average daily flow of anaerobic lagoon effluent was anticipated to be 836557.93 liters per day (0.221 million gallons per day—MGD), 7 days per week, 24 hours per day.

The maximum average BOD(5) loading into the oxidation ditch was calculated as follows

# O 012 745

(mg/l=n/million #): (0.221 MGD) (8.34 #/gal.) (800 mg/l)=1475 #BOD(5)/day, wherein gal.=3.79 liters.

The maximum average TKN loading into the oxidation ditch was calculated as follows: (0.221) (8.34) (62 mg/l)=114#/day

The maximum oxygen demand at process or field conditions for an extended aeration process operated for maximum degree of nitrification was calculated as follows, assuming a design conversion factor of 1.4# oxygen/#BOD(5)+4.5# oxygen/#TKN applied: 1.4(1,475)+4.5(114)=2,578# oxygen/day.

The oxygen required at standard conditions (20°C, one atmosphere, zero dissolved oxygen), asssuming a design conversion factor from process to standard of 1.6, was calculated as follows: 1.6×2,578=4,125# oxygen/day;

$$\frac{4,125\text{\# oxygen/day}}{24\text{ hours/day}} = 172\text{\# oxygen/hour}$$

Assuming that two downdraft submerged turbines would be needed to satisfy this total oxygen requirement, each turbine had to provide 86# oxygen/hour.

The submerged turbine manufacturer recommended selection of two 29.83 kw turbines, each with a 11.19 kw blower to supply approximately 6031.33 liters to an air sparge assembly disposed directly below each turbine impeller.

The volume of the oxidation ditch was calculated so that at high water level, with 6,000 mg/l of mixed liquor suspended solids (MLSS) in its channel, it would be possible to maintain a food-to-microorganism ratio (F/M) of 0.033 (ut of a feasible range of 0.01 to 2.0), as follows:

$$\frac{1,475\text{\# BOD(5)/day}}{(8.34)\ (6,000\text{\# MLSS/million \#mixed liquor})[0.033\text{\# BOD(5)/\#MLSS}]} = 3293237.1\text{ liters.}$$

A ditch volume of 3406797 liters was selected, adn the volumetric loading was calculated as follows:

$$\frac{1,475\text{\# BOD(5)/day}}{120.3\times28316.1\text{ liters}} = 12.25\text{\# BOD(5)/28316.1 liters}$$

The overflow device for the oxidation ditch was then designed so that the ditch operating level could be adjusted to control volume in the ditch between 2271198—3406797 liters.

The channel cross-sectional dimensions were next determined, using the turbine manufacturer's estimate that a 29.83 kw turbine would pump approximately 176017.85 liters per minute.

Using a desired circulation velocity of 0.30 meters/sec with both turbines in operation at high water level, the cross-sectional area for the channel was determined to be 18.58 square meters: 5869.93 liters/18.58 square meters=0.32 meters per second.

The channel was then designed with a trapezoidal cross section as seen in Figure 3 (although rectangular, square, round, oval, or other shapes could be substituted) to furnish this flow rate.

The channel length in the oxidation ditch was then calculated: 3406540.09 liters/18.58 square meters=183.34 meters.

To compensate for the width of the earthen barrier 22, a distance of 6.1 meters was added to the ditch giving 189.43 meters. Then the hydraulic head loss in the channel caused by wall friction was calculated by the Manning Equation for open channel flow (using n=0.03 for a gunnite concrete liner and R=area/wetted perimeter=200/38.19=5.24): Head loss=$[(\text{Velocity}\times n)/(1.49\times R^{0.67})]^2$=0.00005 meter/meter of ditch. Head loss=(601.5) (0.00005)=0.89 cm.

The additional hydraulic head loss caused by flow turbulence around the two bends was also calculated: bend head loss=$2(V^2/2g)$=1.02 cm.

The total hydraulic head loss is the sum of these losses, equalling 1.91 cm.

Each 29.83 kw turbine provides a flow of 176017.85 liters/minute at a total developed hydraulic head of 0.75 meter. Adding 0.02 meter to this operating head normally has an insignificant effect on the pumping capacity of the submerged turbine, so that revising the ditch cross-sectional area in order to maintain a minimum average velocity of 0.30 meter per second is not necessary.

This treatment is intended to reduce BOD(5) to less than 20 mg/l, TSS to less than 20 mg/l, ammonia nitrogen to less than 2 mg/l, and pH to 6—9.


Example II

An oxidation ditch, similar to but smaller than the ditch of Example I, was designed and

9

constructed to treat wastewater effluent (sewage from a school. This effluent had the following characteristics:

| | | |
|---|---|---|
| Biochemical oxygen demand, BOD(5) | = | 200—250 mg/l |
| Total suspended solids, TSS | = | 200—250 mg/l |
| Ammonia nitrogen | = | 15—25 mg/l |
| Total Kjeldahl nitrogen (TKN) | = | 20—30 mg/l |
| pH | = | 7.0 |
| Total phosphorus | = | 6—20 mg/l |

The average daily flow was 0.21 million liters per day, 7 days per week, according to the diural flow cycle of normal domestic waste. Following the procedure of Example I, calculations gave the following results, using the higher values of each range: 115# BOD(5) per day; 13.8# TKN: 223#/day of oxygen required at process conditions; 357#/day of oxygen required at standard conditions; 15#/hr of oxygen per turbine (one 7.46 kw submerged turbine required); 849.48 liters of air (one 1.49 kw blower required); 4,000 mg/l MLSS; 264973.1 liters, at high water level, and 189266.5 liters at low water level; 12.3# BOD(5)/28316.1 liters as the volumetric loading; 28389.98 liters per minute as the turbine pumping rate; 0.34 meters/second as the flow rate in the channel; 1.38 square meters as the flow area; 190.2 meters as the ditch length and 3.05 meters as the barrier width; and 6.35 cm of head loss for the channel + 1.17 cm of head loss for the bends, equalling 7.62 cm total head loss which would reduce the turbine pumping capacity to about 27254.38 liters per minute, causing the flow velocity in the channel to be 0.33 meters.

Example III

After 71 days of continuous operation with no sludge wastage, the oxidation ditch of Example I was analyzed for dissolved oxygen. At the ends of the ducts 29, 60 in discharge channel 75, the dissolved oxygen (D.O.) was 0.6 mg/l; 15.24 meters downstream from the turbines 28, 30, the D.O. was 0.3 mg/l; and in the channel on the opposite side of the island, the D.O. was 0.1 mg/l.

There was no filamentous growth, but the effluent from the clarifiers was cloudy because of suspended and colloidal material, representing unconsumed organic food. In general, the oxidation ditch seemed to be deficient in oxygen and microorganisms.

Example IV

The oxidation ditch of Example I had been operated with discharge of overflow mixed liquor to the flow dividing unit 83 and thence to one of a pair of hopper clarifiers through lines 85, with no sludge wastage for 80 days. The following data was obtained from composite tests of anaerobic effluent and of clarifier overflow:

| Inflow | | Outflow |
|---|---|---|
| 946332.5 liters flow (7 days, 24 hrs/day) | = | Inflow |
| 1,045 | BOD(5), mg/l | 83 |
| 220 | TKN | 45 |
| — | NH$_3$-Nitrogen | 43 |

These results correspond to an oxygen demand of at least 3175.14 kg of oxygen per day or at least 132.45 kg of oxygen per hour at standard conditions when the operating level in ditch 10 was at 2.59 meters with two turbines in operation and about 6441.91 meters of air being injected under each turbine. These oxygen-transfer results are about 70% greater than those anticipated by the manufacturer of the turbines.

Example V

The manufacturer of the submerged turbines used in the oxidation ditch of Example I stated that the recommended air supply rate of 6116.28 liters per minute was about 80% of the maximum air supply rate that the turbine could handle without flooding, so that the flooding rate would be 7645.35 liters for either turbine.

The turbine 28 (single-speed) and the turbine 30 (two-speed) were each connected to a separate positive displacement blower capable of delivering 6597.65 liters at 0.49 kg/sq cm gauge. However, the blowers could be connected for delivering their combined output to the upper sparge ring (53a in Figure 2) beneath either turbine.

Because of friction caused by inadequate size of a single sparge ring, it was estimated that 12175.92—13025.41 liters could be delivered to the flow path of either turbine, about 65% greater than the flood point air supply rate or about 111% greater than the operating air supply rate recommended by the manufacturer of the turbines.

The oxidation ditch of Example I has an operating depth that is variable from 2.29 meters (1.47

10

meters of turbine impeller submergence) to 3.20 meters deep (2.39 meters of turbine impeller submergence). With the depth at 2.59 meters, about 12883.83 liters from both flowers were injected from the upper sparge ring of turbine 28 (single speed), with turbine 30 (dual speed) operating at top speed but ungassed. It was anticipated that flooding of turbine 28 would occur and that the air valves could then be closed until the turbine could handle the air being injected. However, there was no flooding of turbine 28.

Example VI

Dual-speed turbine 30 in the oxidation ditch of Example I was shut off, and the oxidation ditch circulation velocity was allowed to slow down from about 0.61 meters per second to about 0.30 meters per second which turbine 28 could maintain alone. With all air from both blowers being injected through the upper sparge ring of turbine 28 and with ditch depth still at 2.59 meters, it operated without flooding and continued to do so for 1-1/2 hours when the test was discontinued.

Example VII

Both single-speed turbine 28 and dual-speed turbine 30 in the oxidation ditch of Example I were operated (turbine 30 being at top speed) to increase ditch velocity to about 0.61 meters per second, with depth at 2.59 meters, and all of the compressed air supply from both blowers (12883.83 liters) was injected under the impeller of dual-speed turbine 30. It did not flood.

Example VIII

Single-speed turbine 28 was shut down. After the ditch velocity had slowed to about 0.30 meters, all air was again injected under impeller 35 of dual-speed turbine 30, operating at top speed with the operating depth at 2.59 meters. After about seven minutes under these conditions, turbine 30 flooded or stopped pumping.

Example IX

With the oxidation ditch of Example I at an operating level of 2.44 meters, all air (12883.83 liters) was supplied to turbine 28 with turbine 30 at top speed but ungassed. Turbine 28 flooded. The other successful tests at 2.59 meters (i.e, the tests of Examples VI and VII) were attempted, but flooding occured in each instance.

Example X

The level in the oxidation ditch of Example I was raised to about 2.97 meters (1.63 meters of submergence). All successful tests at 2.59 meters were easily reproduced. Moreover, when all air (12883.83 liters) was supplied to dual-speed turbine 30 (operative at top speed), with turbine 28 shut down and the ditch velocity at about 0.30 meters per second (thus reproducing Example VIII except for the depth), turbine 30 did not flood.

Example XI

Each turbine 28, 30 is operated to produce a flow velocity in the channel of the oxidation ditch 10 of Example I of about 0.61 meters. About 13025.41 liters of compressed air is sparged below the turbine blades 35 through both sparge rings 53a, 53b of each turbine. Neither floods, and the clarifier outflow is clear, indicating that all organic food is consumed.

Because it will be readily apparent to those skilled in the art that innumerable variations, modifications, applications, and extensions of these embodiments and principles can be made without departing from the spirit and scope of the invention, what is herein defined as such scope and is desired to be protected should be measured, and the invention should be limited, only by the following claims.

**Claims**

1. A closed-circuit oxidation ditch (10) comprising a wastewater inlet (56), an outlet to a clarifier (83), a return sludge inlet (54), and an endless channel having a bottom (15), opposed sides, (16, 18), and a substantially uniform cross-sectional area, wherein said ditch contains flow-control apparatus adapted to provide repetitive aerobic treatment at least once per circuit-flow cycle to all mixed liquor within said endless channel, which flow-control apparatus comprises:

A. a barrier (22) which is sealably attached to said bottom (15) and said sides (16, 18) and is disposed athwart said endless channel to divide said mixed liquor and said endless channel into upstream liquor within an intake channel (75) and downstream liquor within a discharge channel (77);

B. an axial-flow pump (30), comprising a down-flow impeller (33, 35), an intake funnel (38) which is disposed above said impeller and in flow connection with said upstream liquor, an air sparge means (53) for producing air bubbles which is disposed beneath said impeller, and a downdraft tube (39) surrounding said impeller and said air sparge means;

C. a mounting means for mounting said axial-flow pump in said flow connection with said upstream liquor;

**0 012 745**

D. an aeration means for creating a liquid-air mixture, comprising said air sparge means (53), a source of compressed air, and a delivery means (52) for moving said compressed air from said source to said air sparge means; and

E. a discharge duct (60) which connects said downdraft tube (39) to said discharge channel (77), whereby operation of said axial-flow pump (30) and said aeration means:

1) forces all of said mixed liquor to flow through said discharge duct (60),
2) creates a liquid-air mixture within said discharge duct,
3) completely prevents back-mixing of said aerated mixed liquor to said intake channel (75).

2. The oxidation ditch of claim 1, characterised by that said barrier means is an earthen barrier having a trapezoidal cross section and covered with a layer of gunnite.

3. The oxidation ditch of claim 1 or 2, characterised by that said flow-control apparatus comprises at least two said axial-flow pumps (28, 30), at least two said mounting means, at least two said aeration means, and at least two said discharge ducts in side-by-side relationship.

4. The oxidation ditch of claim 3, characterised by that said discharge ducts converge toward said discharge channel.

5. The oxidation ditch of any one of claims 1 to 4, characterised by that said discharge duct passes beneath said barrier at a greater depth than said bottom of said endless channel, whereby a pressure is generated upon said liquid-air mixture that is greater than the hydraulic pressure at said bottom.

6. The oxidation ditch of claim 5, characterised by that said discharge duct is flow-connected to said downdraft tube, leads downwardly to a selected depth, curves in a downstream direction for a selected distance, and leads upwardly to a discharge point within said discharge channel.

7. The oxidation ditch of claim 6, characterised by that said discharge duct comprises a curved discharge section which is connected to said downdraft tube, a first straight section which is connected to said curved discharge section, an updraft section which is connected to said first straight section, a second straight section which is connected to said updraft section, and a terminal duct which is connected to said second straight section and is disposed in said discharge channel.

8. The oxidation ditch of claim 7, characterised by that said aeration means comprises a sparge tube which is disposed within said discharge duct to provide supplementary air when BOD loads are very heavy and when it is desirable to substitute discharge duct aeration for pump aeration because of flow rate considerations, so that the velocity of upwardly translational movement through said discharge duct is increased by an air-lift pumping effect acting in addition to the pumping effect of said down-flow impeller.

9. The oxidation ditch of claim 8, characterised by that said sparge tube is transversely disposed within said discharge duct.

10. An activated sludge process for aerobically treating a continuous stream of wastewater by continuously admixing said stream with a quantity of circulating mixed liquor which flows translationally within the endless channel of an oxidation ditch at a circulation velocity that is sufficient to maintain floc in a state of suspension therewithin, wherein said process comprises the following steps:

A. providing a barrier means, disposed within said channel, for dividing said mixed liquor and said channel into upstream liquor within an intake channel and downstream liquor within a discharge channel;

B. providing a discharge duct which connects said upstream liquor to said downstream liquor;

C. providing a pump means for pumping all of said upstream liquor through said discharge duct from said intake channel to said discharge channel;

D. providing an aeration means for introducing compressed air to said all of said intake liquor passing through said discharge duct; and

E. operating said pump means and said aeration means in order to:

1) cyclically force all of said mixed liquor through said discharge duct,
2) form a liquid-air mixture within said discharge duct,
3) completely prevent backmixing of said aerated mixed liquor to said intake channel; and wherein said pump means is an axial-flow pump, comprising a down-flow impeller, an intake funnel which is disposed above said impeller and in flow connection with said upstream liquor, an air sparge means for producing air bubbles and forming said liquid-air mixture, and a downdraft tube surrounding said impeller and said air sparge means, said intake funnel and said downdraft tube being connected to said intake end of said discharge duct.

11. The process of claim 10, characterised by that said discharge duct is extended at greater depth for a sufficient distance that substantially all of said repetititve aerobic treatment occurs within said discharge duct and under a selected hydraulic pressure that is greater than the pressure corresponding to said depth of said discharge channel.

12

**0 012 745**

12. The process of claim 11, characterised by that said air sparge means comprises at least one sparge ring which is disposed below said down-flow impeller within said downdraft tube.

13. The process of claim 12, characterised by a plurality of said pump means, said aeration means, and said discharge ducts are provided and wherein said aeration means further comprises at least one sparge tube which is removably disposed within each said discharge duct.

14. The process of claim 13, characterised by varying the proportion of said compressed air fed to each said sparge ring and each said sparge tube, said velocity is varied by at least 50 percent.

15. The process of claim 14, characterised by that said oxidation ditch is selectively operable:

A. to provide aerobic and anoxic zones within said channel for combined nitrification and denitrification of said wastewater; and

B. to vary the lengths of said aerobic and anoxic zones in accordance with seasonal temperature changes.

16. The process of claim 15, characterised by that said oxidation ditch is selectively operably by varying:

(a) the operation of said impellers singly or in parallel,
(b) the speeds of said impellers,
(c) the total amount of said compressed air, and
(d) the proportion of said compressed air between said sparge rings and said sparge tubes, whereby:

(1) said velocity is variable over a range of from 15.24 cm/sec to at least 91.44 cm/sec while maintaining a selected dissolved-oxygen output from said discharge ducts, or
(2) said dissolved-oxygen output is variable while maintaining a selected velocity, or
(3) both said velocity and said dissolved-oxygen output are variable in any desired combination while operating all said turbines at a constant speed.

17. The process of claim 16, characterised by that continuous stream of wastewater is delivered to said channel within said anoxic zone and upstream of said intake channel in order to enable certain of microorganisms, that are present in said anoxic zone and use nitrate oxygen as their oxygen source and hydrogen sulfide as their energy source, to maximize denitrification and to minimize consumption of free dissolved oxygen for chemical and biological oxidation of said hydrogen sulfide, thereby enabling said free dissolved oxygen to be used to a maximum extent for biological BOD removal and nitrification, by utilizing nitrate oxygen that is available in said circulating mixed liquor for oxidation of said hydrogen sulfide that is present in said continuous stream of wastewater.

18. The process of claim 17, characterised by that said anoxic zone is at an anoxic level of 0.1 mg./l. or less of dissolved oxygen.

**Patentansprüche**

1. Im geschlossenen Kreislauf umlaufender Oxidationskanel (10) mit einem Abwassereinlass (56), einem Auslass zu einer Klärvorrichtung (83), einem Einlass für den rücklaufenden Schlamm (54) sowie einem Endloskanal mit einem Boden (15), gegenüberliegend angeordneten Seiten (16, 18) und einer im wesentlichen einförmigen Querschnittsfläche, wobei der Graben eine Durchflussregelvorrichtung aufweist, wodurch die gesamte in Endloskanal enthaltene Mischflüssigkeit zumindest einmal pro Umlauf-Strömungszyklus eine aerobische Wiederholbehandlung erfährt, welche Durchflussregelvorrichtung gekennzeichnet, ist durch:

a. eine dichtend mit dem Boden (15) und den Seiten (16, 18) verbundene Sperre (22), welche quer zum Endloskanal angeordnet ist, um die Mischflüssigkeit und den Endloskanal in eine stromaufwärtige Flüssigkeit in einem Einlasskanal (75) und eine stromabwärtige Flüssigkeit in einem Austragskanal (77) aufzuteilen;

b. eine Axialpumpe (30) mit einem abwärts pumpenden Flügelrad (33, 35), einem Einlauftrichter (38), welcher oberhalb des Flügelrads angeordnet ist, sowie ein das Flügelrad sowie die Luftgebäsevorrichtung umgebendes Fallstromrohr (39);

c. eine Montagevorrichtung zur Anordnung der Achsialpumpe in Strömungsverbindung mit der stromaufwärtigen Flüssigkeit;

d. eine Belüftungsvorrichtung zur Schaffung eines Flüssigkeit/Luftgemisches, bestehend aus der Luftgebläsevorrichtung (53), einer Druckluftquelle und einer Fördervorrichtung (52) zur Förderung der Druckluft von der Quelle zu der Luftgebläsevorrichtung, und

e. einen Austragsschaft (60), welcher das Fallstromrohr (39) mit dem Austragskanal (77) verbindet, so dass der Betrieb der Achsialpumpe (30) und des Belüftungsmittels

1) die gesamte Mischflüssigkeit durch den Austragsschacht (60) drückt,
2) ein Flüssigkeit/Luft-Gemisch in dem Austragsschact (60) entwickelt,

3) eine Rückvermischung der belüfteten Mischflüssigkeit zum Einlasskanal (75) hin vollständig verhindert.

2. Oxidationskanal nach Anspruch 1, dadurch gekennzeichnet, dass die Sperre eine mit einer Spritzbetonschicht abgedeckte Erdsperre trapezförmigen Querschnitts ist.

3. Oxidationskanal nach Anspruch 1 oder 2, dadurch gekennzeichnet, dass die Durchflussregelvorrichtung zumindest zwei Achsialpumpen (28, 30), zumindest zwei Montiereinrichtungen, zumindest zwei Belüftungsvorrichtungen sowie zumindest zwei Austragsschächte in Nebeneinanderanordnung aufweist.

4. Oxidationskanal nach Anspruch 3, dadurch gekennzeichnet, dass diese Austragsschächte zum Austragskanal hin konvergieren.

5. Oxidationskanal nach einem der Ansprüche 1 bis 4, dadurch gekennzeichnet, dass der Austragsschacht unter der Sperre in eine grössere Tiefe als der Boden des Endloskanals gelangt, wodurch ein Druck auf das Flüssigkeit/Luft-Gemisch ausgeübt wird, welcher den hydraulischen Druck am Boden übersteigt.

6. Oxidationskanal nach Anspruch 5, dadurch gekennzeichnet, dass der Austragsschacht in Strömungsverbindung mit dem Fallstromrohr steht, in eine vorbestimmte Tiefe hinunterführt, in stromabwärtiger Richtung über eine vorbestimmte Entfernung gekrümmt verläuft und zu einem Austragspunkt innerhalb des Austragskanals aufwärts führt.

7. Oxidationskanal nach Anspruch 6, dadurch gekennzeichnet, dass der Austragsschacht einen mit einem Fallstromrohr verbundenen gekrümmt Austragsabschnitt, einen mit dem gekrümmt Austragsabschnitt verbundenen geradlinigen Abschnitt, einen mit dem geradlinigen Abschnitt verbundenen Steigstromabschnitt, einen mit dem Steigstromabschnitt verbundenen zweiten geradlinigen Abschnitt und einen mit dem zweiten geradlinigen Abschnitt verbundenen, im Austragskanal angeordneten Endschacht aufweist.

8. Oxidationskanal nach Anspruch 7, dadurch gekennzeichnet, dass das Belüftungsmittel ein in dem Austragsschacht angeordnetes Gebläserohr aufweist, um zusätzliche Luft zu liefern, wenn die BSB-Belastungen sehr stark sind oder wenn Austragsschachtbelüftung anstelle von Pumpenbelüftung auf Grund strömungsgeschwindigkeitstechnischer Überlegungen eingesetzt werden soll, so dass die Geschwindigkeit aufwärtiger fortschreitender Bewegung durch den Austragsschacht durch einen Mammutpumpeneffekt erhöht wird, welcher zusätzlich zu dem Pumpeffekt des abwärts pumpenden Flügelrades wirksam wird.

9. Oxidationskanal nach Anspruch 8, dadurch gekennzeichnet, dass das Gelbäserohr quer in dem Austragsschacht angeordnet ist.

10. Belebtschlamm-Verfahren für die aerobische Behandlung eines kontinuierlichen Abwasserstroms durch kontinuierliche Zumischung zu diesem Strom einer bestimmten Menge einer umlaufenden Mischflüssigkeit, welche fortschreitend innerhalb des Endloskanals eines Oxidationskanals mit einer Umlaufgeschwindigkeit strömt, welche ausreicht, um Flocken in suspendiertem Zustand hiermit zu halten, gekennzeichnet durch folgende Schritte:

A. Anordnung einer Sperre in dem Kanal zur Unterteilung der Mischflüssigkeit und des Kanals in eine stromaufwärtige Flüssigkeit innerhalb eines Einlasskanals und eine stromabwärtige Flüssigkeit in einem Austragskanal;

B. Anordnung eines die stromaufwärtige Flüssigkeit mit der stromabwärtigen Flüssigkeit verbindenden Austragsschachtes;

C. Anordnung einer Pumpe zum Pumpen der gesamten stromaufwärtigen Flüssigkeit durch den Austragsschacht aus dem Einlasskanal in den Austragskanal;

D. Anordnung einer Belüftungsvorrichtung zur Einführung von Druckluft in die gesamte durch den Austragsschacht gelangende Zulaufflüssigkeit, und

E. Betätigung der Pump- und der Belüftungsvorrichtung, um

1) die gesamte Mischflüssigkeit zyklisch durch den Austragsschacht zu drücken,
2) ein Flüssigkeit/Luft-Gemisch in Dem Austragsschacht zu bilden,
3) eine Rückmischung der belüfteten Mischflüssigkeit im Zulaufkanal zuverläsig zu verhindern,

wobei die Pumpvorrichtung eine Achsialpumpe ist, bestehend aus einem abwärts pumpenden Flügelrad, einem Zulauftrichter, welcher oberhalb des Flügelrades angeordnet ist und sich in Strömungsverbindung mit der stromaufwärtigen Flüssigkeit befindet, einer Gebläsevorrichtung zur Erzeugung von Luftblasen und zur Bildung des Flüssigkeit/Luft-Gemisches und einem das Flügelrad und die Gebläsevorrichtung umgebenden Fallstrom-Rohr, wobei der Zulauftrichter und das Fallstromrohr als Zulaufende des Austragsschachtes miteinander verbunden sind.

11. Verfahren nach Anspruch 10, dadurch gekennzeichnet, dass der Austragschacht in grösserer Tiefe über eine ausreichende Entfernung verläuft, so dass im wesentlichen die gesamte aerobische Wiederholbehandlung innerhalb des Austragsschachts unter einem vorbestimmten hydraulischen Druck erfolgt, welcher den der Tife des Austragskanals entsprechenden Druck übersteigt.

12. Verfahren nach Anspruch 11, dadurch gekennzeichnet, dass die Gebläse-Vorrichtung

O 012 745

zumindest einen Gebläsering aufweist, welcher unterhalb des abwärts pumpenden Flügelrads innerhalb des Fallstromrohrs angeordnet ist.

13. Verfahren nach Anspruch 12, gekennzeichnet, durch eine Vielzahl von pumpvorrichtung, Belüftungsmitteln und Austragsschächten, wobei die Belüftungsmittel des weiteren zumindest ein Gebläserohr aufweisen, welches entfernbar innerhalb jedes Austragsschachtes angeordnet ist.

14. Verfahren nach Anspruch 13, gekennzeichnet durch Änderung des Anteils an jedem Gebläsering und jedem Gebläserohr zugeführter Druckluft, wodurch die Strömungsgeschwindigkeit um zumindest 50 Prozent veränderbar ist.

15. Verfahren nach Anspruch 14, dadurch gekennzeichnet, dass der Oxidationskanal wahlweise zu betreiben ist:

A. um aerobische und anoxe Zonen innerhalb des Kanals für kombinierte Nitrifikation und Denitrifikation des Abwassers vorzusehen, und

B. um die Längen der aerobischen und anoxen Zonen entsprechend den saisonbedingten Temperaturänderungen zu variieren.

16. Verfahren nach Anspruch 15, dadurch gekennzeichnet, dass der Oxidationskanal wahlweise zu betreiben ist durch Änderung

(a) des Betriebs der Flügelräder einzeln oder parallel zueinander,
(b) der Geschwindigkeit der Flügelräder,
(c) der Gesamtmenge an Druckluft,
(d) des Verhältnisses der Druckluft zwischen den Gebläseringen und den Gebläserohren, wodurch

(1) die Geschwindigkeit über einen Bereich von 15.24 cm/sek. und zumindest 91.44 cm/sek. unter Beibehaltung eines vorbestimmten gelösten Sauerstoff-Ausstosses aus den Austragsschächten, variierbar ist, oder
(2) der gelöste Sauerstoff-Ausstoss unter Beibehaltung einer vorbestimmten Geschwindigkeit variierbar ist, oder
(3) sowohl die Geschwindigkeit als auch der gelöste Sauerstoff-Ausstoss in jeder beliebigen Kombination bei Betrieb aller Turbinen mit konstanter Geschwindigkeit variierbar sind.

17. Verfahren nach Anspruch 16, dadurch gekennzeichnet, dass der kontinuierliche Abwasserstrom zu dem Kanal innerhalb der anoxischen Zone und stromaufwärts des Zulaufkanals gefördert wird, um es bestimmten in der anoxischen Zone vorhandenen und Nitrat-Sauerstoff als ihre Sauerstoffquelle und Wasserstoffsulfid als ihre Energiequelle verwenden Miktroorganismen zu ermoglichen, die Denitrifikation auf ein Maximum zu steigern und den Verbrauch frei gelösten Sauerstoffs für chemische und biologische Oxidation des Wasserstoffsulfids auf ein Minimum herabzusetzen, so dass der frei gelöste Sauerstoff dadurch in grösstmöglichem Masse für biologische BOD-Entfernung und Nitrifikation ausgenutzt werden kann, indem der Nitratsauerstoff welcher, in der umlaufenden Mischflüssigkeit vorhanden ist, zur Oxidation des in dem kontinuierlichen Abwasserstrom enthaltenen Wasserstoffsulfids verwendet wird.

18. Verfahren nach Anspruch 17, dadurch gekennzeichnet, dass die anoxische Zone einen Anoxiepegel von 0.1 mg/1 gelösten Sauerstoffs oder weniger aufweist.

**Revendications**

1. Fossé d'oxydation en circuit fermé (10) comportant une arrivée d'eaux usées (56), une sortie vers un clarificateur (83), une arrivée de boue recyclée (54), et un canal sans fin ayant un fond (15), des côtés opposés (16, 18) et une surface en section transversale pratiquement uniforme, ce fossé contenant un dispositif de réglage de circulation adapté pour appliquer un traitement aérobic répétitif au moinse une fois par cycle de parcours de circuit à toute la liqueur mélangée dans ledit canal sans fin, lequel dispositif de réglage de circulation comporte:

A. Une barrière (22) fixée de façon étanche sur le fond (15) et les côtés (16, 18) en travers de ce canal sans fin pour séparer la liquer mélangée et le canal sans fin en une liqueur amont dans un canal d'admission (75) et une liqueur aval dans un canal de décharge (77);

B. Une pompe à flux axial (30) comportant une turbine (33, 35) induisant une circulation vers le bas, une embouchure d'admission (38) disposée au-dessus de la turbine et un communication avec la liqueur amont, des moyens de projection d'air (53) pour produire des bulles d'air et disposés sous la turbine, et un tube d'aspiration vers le bas (39) entourant la turbine et lesdits moyens de projection d'air;

C. Des moyens de montage pour monter la pompe à flux axial de manière qu'elle communique avec la liqueur amont;

D. Des moyens d'aération pour créer un mélange liquide-air, comportant ces moyens de projection d'air (53), une source d'air comprimé, et des moyens de fourniture (52) pour amener cet air comprimé de ladite source auxdits moyens de projection d'air, et

# O O12 745

E. Un conduit de décharge (60) qui raccorde le tube d'aspiration vers le bas (39) au canal de décharge (77), grâce à quoi le fonctionnement de la pompe à flux axial (30) et des moyens d'aération:

1) force toute la liqueur mélangée à circuler à travers le conduit de décharge (60);
2) crée un mélange liquide-air à l'intérieur de ce conduit de décharge,
3) empêche complètement la liqueur mélangée aérée de revenir se mélanger au canal d'admission (75).

2. Fossé d'oxydation selon la revendication 1, caractérisé en ce que cette barrière est une barrière en terre ayant une section transversale trapézoïdale et recouverte d'une couche de gunite.

3. Fossé d'oxydation selon la revendication 1 ou 2, caractérisé en ce que le dispositif de réglage de circulation comporte au moins deux pompes à flux axial (28, 30) au moins deux moyens de montage, au moins deux moyens d'aération, et au moins deux conduits de décharge disposés côte à côte.

4. Fossé d'oxydation selon la revendication 3, caractérisé en ce que les conduits de décharge convergent vers le canal de décharge.

5. Fossé d'oxydation selon l'une quelconque des revendications 1 à 4, caractérisé en ce que le conduit de décharge passe en dessous de la barrière à une profondeur plus grande que le fond du canal sans fin, grâce à quoi il est créé sur le mélange liquide-air une pression supérieure à la pression hydraulique régnant à ce fond.

6. Fossé d'oxydation selon la revendication 5, caractérisé en ce que le conduit de décharge communique avec le tube d'aspiration vers le bas, va vers la bas jusqu'à une profonduer choisie, s'incurve vers l'aval sur une distance choisie et remonte jusqu'à un point de décharge dans le canal de décharge.

7. Fossé d'oxydation selon la revendication 6, caractérisé en ce que le conduit de décharge comporte une section de décharge incurvée qui est raccordée au tube d'aspiration vers le bas, une première section rectiligne qui est raccordée à cette section de décharge incurvée, une section se redressant raccordée à la première section rectiligne, une deuxième section rectiligne se raccordant à cette section se redressant, et un conduit terminal se raccordant à cette deuxième section rectiligne et disposée dans le canal de décharge.

8. Fossé d'oxydation selon la revendication 7, caractérisé en ce que les moyens d'aération comportent un tube de projection d'air disposé à l'intérieur du conduit de décharge pour procurer de l'air supplémentaire lorsque la DBO est très élevée et lorsqu'il est souhaitable de substituer l'aération par le conduit de décharge à l'aération par pompes pour des considérations de débit, de telle sorte que la vitesse du mouvement de translation ascendant à travers le conduit de décharge est augmenté par un effet de pompage dû à l'ascension de l'air s'ajoutant à l'effet de pompage de la turbine induisant une circulation vers le bas.

9. Fossé d'oxydation selon la revendication 8, caractérisé en ce que le tube de projection d'air est disposé transversalement à l'intérieur du conduit de décharge.

10. Procédé de boues activées pour traiter de manière aérobic un courant continu d'eaux usées en mélangeant en continu ce courant avec une quantité de liqueur mélangée en circulation qui s'écoule en translation dans le canal sans fin d'un fossé d'oxydation à une vitesse de circulation suffisant pour y maintenir en suspension les flocons, ce procédé comportant les stades suivants:

A.—procurer une barrière dans le canal pour diviser la liqueur mélangée et le canal en une liqueur amont dans un canal d'admission et une liqueur aval dans un canal de décharge, B.—procurer un conduit de décharge qui raccorde la liqueur amont à la liqueur aval;

C.—procurer des moyens de pompe pour pomper toute la liqueur amont à travers le conduit de décharge du canal d'admission au canal de décharge;

D.—procurer des moyens d'aération pour introduire de l'air comprimé dans toute la liqueur amont passant à travers le conduit de décharge, et

E.—faire fonctionner les moyens de pompe et les moyens d'aération afin de:

1) forcer cycliquement toute la liqueur mélangée à circuler à travers le conduit de décharge;
2) former un mélange liquide-air à l'intérieur de ce conduit de décharge,
3) empêcher complètement la liqueur mélangée aérée de revenir se mélanger au canal d'admission;

et dans lequel les moyens de pompe sont une pompe à flux axial comportant une turbine induisant une circulation vers le bas, une embouchure d'admission disposée au-dessus de la turbine et en communication avec la liqueur amont, des moyens des projection d'air pour produire des bulles d'air et former ce mélange liquide-air, et un tube d'aspiration vers le bas entourant la turbine et les moyens de projection d'air, cette embouchure d'admission et ce tube d'aspiration vers le bas étant raccordés à l'extrémité d'admission du conduit de décharge.

11. Procédé selon la revendication 10, caractérisé en ce que le conduit de décharge se prolonge à une profondeur plus grande que la profondeur du canal de décharge sur une distance suffisante pour que pratiquement tout le traitement aérobic répétitif s'effectue à l'intérieur du conduit de décharge et

16

sous une pression hydraulique selectionnée supérieure à la pression correspondant à la profondeur du canal de décharge.

12. Procédé selon la revendication 11, caractérisé en ce que les moyens de projection d'air comportent au moins un anneau de projection d'air disposé en dessous de la turbine à circulation vers le bas à l'intérieur du tube d'aspiration vers le bas.

13. Procédé selon la revendication 12, caractérisé par une multiplicité de moyens de pompe, de moyens d'aération et de conduits de décharge et en ce que les moyens d'aération comportent en outre un tube de projection d'air disposé de façon amovible à l'intérieur de chaque conduit de décharge.

14. Procédé selon la revendication 13, caractérisé en ce qu'en faisant varrier la proportion d'air comprimé amené à chaque anneau de projection d'air et à chaque tube de projection d'air, cette vitesse varie d'au moins 50%.

15. Procédé selon la revendication 14, caractérisé en ce que ce fossé d'oxydation peut fonctionner sélectivement:

A. Pour procurer des zones aérobics et anoxiques à l'intérieur du canal pour une nitrification et une dénitrification combinées de ces eaux usées; et

B. Pour faire varier les longueurs de ces zones aérobics et anoxiques en fonction des variations de température saisonnières.

16. Procédé selon la revendication 15, caractérisé en ce que ce fossé d'oxydation peut fonctionner sélectivement en faisant varier:

a) le fonctionnement des turbines, isolément ou en paralle

b) les vitesses des turbines,

c) la quantité totale d'air comprimé, et

d) la proportion de cet air comprimé entre les anneaux de projection d'air et les tubes de projection d'air, grâce à quoi:

1) on peut faire varier la vitesse entre 15,24 cm/sec et au moins 91,44 cm/sec. tout en maintement une sortie d'oxygène dissous choisi des conduits de décharge;

2) cette sortie d'oxygène dissous peut varier tout en maintenant une vitesse choisie; ou

3) on peut faire varier à la fois la vitesse et la sortie d'oxygène dissous selon toute combinaison désirée tout en faisant tourner toutes les turbines à une vitesse constante.

17. Procédé selon la revendication 16, caractérisé en ce que le courant continu d'eaux usées est amené au canal à l'intérieur de la zone anoxique et en amont du canal d'admission afin de permettre à certains microorganismes, qui sont présents dans cetts zone anoxique et qui utilisent l'oxygène des nitrates comme source d'oxygène et l'hydrogène sulfureux comme source d'énergie, de rendre maximale le dénitrification et de réduire la consommation d'oxygène dissous libre pour l'oxydation chimique et biologique de cet hydrogène sulfureux, ce qui permet d'utiliser au maximum l'oxygène dissous libre pour l'élimination de la DBO et la nitrification biologique, en utilisant l'oxygène des nitrates qui est disponible dans la liqueur mélangée en circulation pour l'oxydation de cet hydrogène sulfureux présent dans le courant continu d'eaux usées.

18. Procédé selon la revendication 17, caractérisé en ce que cette zone anoxique a un niveau anoxique inférieur ou égal à 0,1 mg/litre en oxygène dissous.

FIG. 1

FIG. 3

FIG. 4

FIG. 2

HIGH WATER
LINE 48

LOW WATER
LINE 49

0 012 745